# EUROPÄISCHE PATENTSCHRIFT

(11) **EP 1 790 406 B1**
(45) Veröffentlichungstag und Bekanntmachung des Hinweises auf die Patenterteilung: **28.03.2012**
(21) Anmeldenummer: 06024092.6
(22) Anmeldetag: 21.11.2006
(51) Int. Cl.: B01D 39/16

(54) **Filterelement und Verfahren zu seiner Herstellung**
Filter element and method of making
Élément de filtration et procédé de fabrication

(30) Priorität: 22.11.2005 DE 102005055607
(43) Veröffentlichungstag der Anmeldung: 30.05.2007
(73) Patentinhaber: MANN+HUMMEL Innenraumfilter GmbH & Co. KG, 95482 Gefrees (DE)
(72) Erfinder: Trnetschek, Steffan, 95482 Gefrees (DE)
(74) Vertreter: LOUIS, PÖHLAU, LOHRENTZ

(56) Entgegenhaltungen:
- WO-A-95/17943
- WO-A-03/013732
- DE-A1- 4 123 122
- DE-A1- 19 628 184
- DE-A1- 19 735 993
- DE-C1- 3 815 145
- US-A- 3 531 920
- US-A- 5 066 400

## Beschreibung

Die Erfindung betrifft ein Filterelement gemäß dem Oberbegriff des Anspruches 1 sowie ein Verfahren zu seiner Herstellung.

Filterelemente werden als reine Partikelfilter oder als Kombinationsfilter in Kraftfahrzeugen verwendet. Bei Kombinationsfiltern sind wenigstens eine Partikelfilterschicht und wenigstens eine Adsorptionsschicht, oder umgekehrt, in Strömungsrichtung der Luft hintereinander angeordnet und im allgemeinen plissiert, d.h. zick-zack-förmig gefaltet, um bei einer möglichst geringen Baugröße eine relativ große Anströmfläche zu realisieren.

Pollenfilter, die Allergiker zuverlässig schützen sollen, müssen im Bereich um 5 µm-Partikelgröße eine Abscheideleistung von > 97 % aufweisen und dazu in der Lage sein, mehr als 30 % der lungengängigen Partikel zurückzuhalten, die im Größenbereich um 0,3 µm liegen. Dieser zuletzt genannte Größenbereich ist derjenige, der für Partikelfilter die größten Probleme darstellt. Bei diesem Größenbereich handelt es sich um den sogenannten MPPS-Bereich (= most penetrating particle size). Dieser Größenbereich wird im Labor in der Regel mit einem NaCl-Aerosol gemessen. Ein typisches Test-Aerosol für größere Partikel, wie Pollen, ist ISO 121031 A2 oder A4.

Die genannten Pollenfilter sollen in einem Kraftfahrzeug eine Standzeit von 30.000 km erreichen. Durch die immer größer werdenden Inspektionsintervalle von Fahrzeugen werden mittlerweile auch 60.000 km Standzeit gefordert.

Allen Filtermaterialien, die plissiert werden, ist gemeinsam, dass sie eine gewisse Eigensteifigkeit besitzen müssen, um unter den gegebenen Einsatzbedingungen in einem Kraftfahrzeug ihre Faltenform beizubehalten. Aus diesem Grunde werden Vliese oft mit Trägerschichten laminiert. Die Verwendung solcher Träger- bzw. Stützschichten führt jedoch dazu, dass bei einer Prüfung des Kosten-Nutzen-Verhältnisses die Kosten für ein Spinnvlies zur Stützung eines Meltblownvlieses bis zu 70 % der Gesamtkosten des Verbundes betragen können. Die Kosten für ein Gittergelege zur Stützung eines nicht selbst tragenden Vlieses liegen zum Teil noch höher.

Die Stützkomponenten bilden nur eine mechanische Stabilisierung des Fi!tere!ementes, filtertechnisch sind sie weitgehend nutzlos. Außerdem ergibt sich der Mangel, dass jedes Zusatzvlies oder Stützgitter stets auch mit einer Erhöhung des Druckabfalles des gesamten Laminates einhergeht. Partikelfilter mit einem möglichst niedrigen Druckabfall - insbesondere über die gesamte Laufzeit des Filterelementes - sind von besonderer Bedeutung, weil ein niedriger Druckabfall mit einem entsprechend klein dimensionierten Lüftermotor und deshalb mit einem entsprechend geringen Energieverbrauch einhergeht. Es ist außerdem zu berücksichtigen, dass sich während der Laufzeit auf dem Filterelement ein Filterkuchen der auf dem Filterelement zurückgehaltenen Pollen, Staubpartikel u. dgl. bildet. Dieser Filterkuchen wächst im Laufe der Filtration an, d.h. er wird stetig dicker. Mit zunehmender Schichtdicke des Filterkuchens steigt sein Strömungswiderstand und damit der Druckabfall des Filterelementes an. Dieser Druckabfallanstieg sollte möglichst niedrig sein. Außerdem bedeutet ein geringerer Druckabfall auch eine geringere Geräuschentwicklung des Lüftermotors beim Durchsatz definierter Luftmengen im Kraftfahrzeug, woraus eine Erhöhung des Fahrtkomforts resultiert.

Die Forderung nach Kraftfahrzeug-Filtersystemen mit einer guten Abscheideleistung ist zum Druckverlust und zur geforderten Standzeit eines Filterelementes im Kraftfahrzeug, bis es ausgetauscht werden muss, konträr.

Die DE 196 28 184 A1 schlägt hierzu eine Filteranordnung mit einer plissierten Vliesschicht vor, die als einlagiges trägerloses Mikro-Spunbondvlies ausgebildet ist, dessen Flächengewicht zwischen 70 und 200 g/m², vorzugsweise zwischen 110 und 150 g/m², dessen Dicke zwischen 0,7 und 1,5 mm und dessen Faserstärken zwischen 2 und 20 µm bei einer mittleren Faserstärke von 3 bis 5 µm liegen. Dabei werden die größeren Faserstärken durch Faserbündelungen erreicht. Diese bekannte Vliesschicht weist ohne Kaschierung und ohne Stützschicht eine ausreichende Eigensteifigkeit auf, um sie plissieren zu können. Die Eigensteifigkeit dieser bekannten Vliesschicht ist praktisch isotrop, d.h. dass in jeder Schichtrichtung etwa die gleiche Biegesteifigkeit gegeben ist. Das wird dadurch erreicht, dass die Vliesschicht eine mittlere Faserstärke zwischen 3 und 5 µm aufweist, wodurch die notwendigen Filtereigenschaften bedingt sind, andererseits aber auch Faserbündelungen vorliegen, die ein natürliches Stützgerüst bilden, ohne - im Gegensatz zu bekannten Stützschichten - die Filtereigenschaften, insbesondere im Sinne einer Erhöhung des Differenzdruckes, negativ zu beeinflussen.

Aus der DE 102 57 833 A1 ist ein bahnförmiges Filtermaterial für einen Filterkörper bekannt, das zick-zack-förmig gefaltet ist und zu beiden Seiten des Filtermaterials wechselseitig eingeformte Sicken aufweist, die jeweils etwa senkrecht zu den Faltlinien des zu faltenden Filtermaterials in voneinander beabstandeten Doppelreihen verlaufen. Jede Doppelreihe besteht aus gegensinnig eingeformten, nebeneinander verlaufenden Längssicken. Die Sicken der Doppelreihen sind jeweils von Doppelreihe zu Doppelreihe in Richtung der Faltlinien versetzt zueinander angeordnet. Zur Einformung der Sicken ist ein zusätzlicher Prägeprozess oder eine spezielle Prägewalze im Verarbeitungsprozess, d.h. bei der Plissierung, erforderlich, der bei synthetischen Materialien, wie beispielsweise PP, PET oder dergleichen, wesentlich schwieriger zu realisieren ist als bei Filtermaterialien aus Papier. Außerdem erreichen die synthetischen Materialien nicht die gewünschte Stabilität, wie sie bei Papierfiltermedien gegeben ist.

Das Dokument WO 95/17943 A offenbart ein Filter mit Noppen und Sicken, die in einem Prägeverfahren hergestellt sind. Das gleich gilt ebenfalls für Dokument DE 197 35 993 A1, welches ein Filterelement aus vorgeprägten Filtervliesplatten beschreibt.

Der Erfindung liegt die Aufgabe zugrunde, ein Filterelement der eingangs genannten Art und ein Verfahren zu seiner Herstellung zu schaffen, wobei eine verbesserte Stabilität und Staubeinlagerungskapazität realisierbar ist, wobei die Abscheideleistung und der Druckabfall unverändert bleiben und ein zusätzlicher Prägeprozess bei der Herstellung des Filterelementes vermieden wird.

Diese Aufgabe wird gegenständlich erfindungsgemäß durch die Merkmale des Patentanspruches 1 gelöst. Bevorzugte Aus- bzw. Weiterbildungen des erfindungsgemäßen Filterelementes sind in den Unteransprüchen 1 bis 3 gekennzeichnet. Das erfindungsgemäße Verfahren zur Herstellung des erfindungsgemäßen Filterelementes ist durch die Merkmale des Anspruches 4 bestimmt. Bevorzugte Aus- bzw. Weiterbildungen des erfindungsgemäßen Verfahrens sind in den Unteransprüchen 5 bis 7 gekennzeichnet.

Erfindungsgemäß wird das genoppte oder mit Sicken versehene Meltblown- oder Mikro-Spunbondvlies in einem einzigen Verfahrensschritt hergestellt, in dem ein geeignetes luftdurchlässiges Ablageelement bei der Vliesherstellung verwendet wird.

Beispielsweise ist es möglich, ein Mikro-Spunbondvlies, wie es aus der oben zitierten DE 196 28 184 A1 bekannt ist, mit einer Vorrichtung herzustellen, wie sie aus der DE 41 23 122 A1 bekannt ist. Bei dieser bekannten Vorrichtung zur Herstellung einer Kunststoff-Vliesbahn kommt als luftdurchlässiges Ablageelement für die Fasern des Vliesmaterials eine engmaschige Siebtrommel zur Anwendung, so dass sich die im Prozess bildenden Fasern zuverlässig auf der Siebtrommel ablegen. Dabei entsteht ein einlagiges trägerloses Mikro-Spunbondvlies mit einer glatten Oberfläche.

Im Unterschied hierzu ergibt sich erfindungsgemäß ein genopptes oder mit Sicken versehenes Mikro-Spunbondvlies oder ein genopptes oder mit Sicken versehenes Meltblownvlies, weil das Ablageelement nicht einfach von einer engmaschigen Siebtrommel, sondern von einem genoppten oder mit Sicken versehenen Ablageelement gebildet ist, mittels welchem sich das entsprechende Spiegelbild in zuverlässiger Art und Weise in der Oberflächenstruktur des Faservlieses abbildet.

Erfindungsgemäß ist es möglich, in einem Schritt ohne weiteres, d.h. ohne weitere Verfahrensschritte, ein genopptes oder gesicktes Mikro-Spunbondvlies herzustellen. Die Noppenstruktur des Mikro-Spunbondvlieses hat zur Folge, dass sich die angeströmte Oberfläche und die Formstabilität des erfindungsgemäßen Filterelementes erhöhen. Die erhöhte Anströmoberfläche bewirkt eine überraschend gute Verbesserung der Staubeinlagerungskapazität, wobei die Abscheideleistung und der Anfangsdruckabfall nahezu unverändert bleiben. In weiterer vorteilhafter Weise wird erfindungsgemäß ein zusätzlicher Prägeprozess zur Vergrößerung der Anströmoberfläche vermieden. Es hat sich überraschend herausgestellt, dass der Druckabfall über die gesamte Filterlebensdauer bei den erfindungsgemäßen genoppten synthetischen Faservliesen infolge der vergleichsweise großen Staubeinlagerungskapazität deutlich niedriger bleibt als bei bekannten ungenoppten Filtermedien.

Meltblownvliese sind im Prinzip Mikro-Spunbondvliesen ähnlich. Der Meltblown-Prozess ist durch die Extrusion eines thermoplastischen, filamentformenden Polymers durch eine Düse gekennzeichnet, die mehrere hundert Spinnbohrungen aufweist, die in einer Reihe nebeneinander angeordnet sind. Heiße Luft strömt an beiden Seiten der Düsenspitze vorbei und zieht die aus den Spinnbohrungen austretenden Polymerströme zu sehr feinen Filamenten aus, die mit einer hohen Luftgeschwindigkeit auf ein Siebband geblasen werden und ein Meltblownvlies bilden. Die Filamente werden auf ein genopptes oder mit Sicken versehenes Ablageelement geblasen, um ein genopptes oder gesicktes Meltblownvlies herzustellen. Um jedoch ein selbsttragendes plissierfähiges Medium zu erhalten, müssen die Faserstärken entsprechend den im Patentanspruch 1 angegebenen Durchmesserwerten bzw. -bereichen eingestellt werden.

Erfindungsgemäß ist es also möglich, genoppte oder gesickte Mikro-Spunbondvliese und genoppte oder gesickte Meltblownvliese herzustellen, wobei ein nachfolgendes Prägen der entsprechenden synthetischen Vliese entfällt. Das ist besonders vorteilhaft, weil ein ungewolltes Reißen des Filtermediums beim Prägen vermieden wird. Dabei muss berücksichtigt werden, dass das Vlies als synthetisches Material - im Gegensatz zu den in der eingangs zitierten DE 102 57 833 A1 beschriebenen Papierbahnen - viel leichter reißt.

Das erfindungsgemäß hergestellte verbesserte selbsttragende Meltblown- oder Mikro-Spunbondvlies weist eine Noppen- oder Sicken-Struktur auf, die sich über die gesamte Oberfläche des Vlieses vorzugsweise gleichförmig erstreckt. Damit ergibt sich eine hohe Oberflächenvergrößerung zur Staubablagerung. Außerdem wird das erfindungsgemäß hergestellte Faservlies, d.h. das Partikelfiltervliesmaterial, durch die gleichmäßig genoppte bzw. gesickte Struktur mechanisch stabilisiert.

Da mit Hilfe der Noppen- oder Sicken-Struktur die Staubeinlagerungskapazität des Meltblownvlieses oder des Mikro-Spunbondvlieses erhöht ist, ist es im Bedarfsfall mit Hilfe einer zusätzlichen Nanofaser-Beschichtung auf Basis eines elektrostatischen Spinnverfahrens möglich, leistungsfähige Kraftfahrzeug-Partikelfilter oder Kraftfahrzeug-Kombinationsfilter bereitzustellen, die im Vergleich zu bekannten Kraftfahrzeug-Partikel- oder -Kombinationsfiltern auch eine verbesserte Abscheideleistung, bei sonst weitgehend gleichbleibenden Leistungsdaten, besitzen. Dabei wird das erfindungsgemäße genoppte oder gesickte Mikro-Spunbondvlies nur mit einer solchen Menge Nanofasern belegt, dass bei allen drei charakteristischen Partikelfilterparametern, nämlich beim Druckabfall, der Staubeinlagerungskapazität und der Abscheideleistung im Vergleich zum Stand der Technik verbesserte Kennwerte erreicht werden. Zu diesem Zwecke wird beispielsweise so vorgegangen, wie in der DE 101 37 161 A1 offenbart ist, aus der ein Filterelement mit wenigstens einer Trägerlage bekannt ist, die mit in einem elektrostatischen Spinnverfahren hergestellten Fasern beschichtet ist, wobei die Fasern einen Durchmesser im Bereich von 0,1 µm bis 20 µm besitzen. Die wenigstens eine Trägerlage kann dort aus einem Spinnvlies oder aus einer Adsorberschicht gebildet sein.

Die nachfolgende Tabelle spiegelt die partikelabscheidenden Eigenschaften verschiedener synthetischer Filtermedien bei 23° C und 50 % relativer Luftfeuchtigkeit wieder. Das Partikelfilter-Medium 1 ist ein Mikro-Spunbondvlies gemäß der zitierten DE 196 28 184. Das entsprechende genoppte Partikelfilter-Medium 1 wurde erhalten, indem ein genopptes oder mit Sicken versehenes Ablageelement zu Anwendung gelangte. Das Partikelfilter-Medium 1 als auch das genoppte Partikelfilter-Medium 1 wurden gemäß der DE 101 37 161 A1 mit Nanofasern nach dem bipolaren Prinzip beschichtet und daraus ebenfalls Filterelemente hergestellt. Eine solche Beschichtung wird nur dann durchgeführt, wenn Partikelfilter mit einer vergleichsweise hohen Abscheideleistung bereitgestellt werden sollen. Werden die Partikelfilter mit einer mittleren Abscheideleistung verglichen, so stellt sich heraus, dass sich bei genoppten Filtermedien die Staubspeicherkapazität erhöht. Das bedeutet eine Verlängerung der Standzeit des Partikelfilters. Trotz dieser Verbesserung, d.h. Verlängerung der Standzeit, weist das genoppte Filtermedium einen unveränderten Druckabfall und eine unveränderte Abscheideleistung beim Durchströmen von mit Pollen beladener Luft auf.

Die mit Nanofasern beschichteten Filtermedien zeigen den gleichen Trend wie die unbeschichteten Filtermedien. Die verbesserte Abscheideleistung bewirkt - wie zu erwarten ist - eine Verringerung der Staubspeicherkapazität und eine Verkürzung der Standzeit im Vergleich zu entsprechenden unbeschichteten Filtermedien (Spalte 3 und Spalte 1). Es ist bemerkenswert, dass mit der genoppten Struktur Partikelfilter für hohe Anforderungen an die Abscheideleistung bereitgestellt werden können, die eine vergleichbare Standzeit aufweisen, wie Partikelfilter mit ungenoppten Filtermedien, die nur für eine mittlere Abscheideleistung konzipiert sind (Spalte 4 und Spalte 1). Das heißt auf der Grundlage der erfindungsgemäßen genoppten oder gesickten Mikro-Spunbondvliese oder Meltblownvliese ergibt sich die Möglichkeit, bekannte Partikelfilter, die nur eine mittlere Abscheideleistung besitzen und die Filtermedien mit einer glatten Oberfläche verwenden, durch leistungsfähigere Filterelemente zu ersetzen, indem genoppte oder gesickte synthetische Vliesmaterialien verwendet werden, die mit Nanofasern beschichtet sind.

Tabelle: Partikelabscheidende Eigenschaften der Filtermedien, die bei 23°C und 50% relativer Luftfeuchte ermittelt worden sind:

| Eigenschaft | Partikelfilter-Medium 1 | | | |
|---|---|---|---|---|
| | | genopptes | mit Nanofasern beschichtetes | genopptes u. mit Nanofasern beschichtetes |
| Anzahl der Lagen im Filtermedium | 1 | 1 | 1 | 1 |
| Druckabfall bei 450 m³/min und einer Anströmfläche von 0,058 m² in Pa | 46 | 42 | 52 | 50 |
| Abscheideleistung mit NaCl bei 0,3-0,5 µm in % | 28 | 25 | 43 | 45 |
| Staubspeicherkapazität, die erzielt wird, wenn sich der Druckabfall des Filtermediums bei 300 m³/h um 200 Pa erhöht; in g: a) mit ISO 12103-1 A2 fine Staub | 35 g | 66 g | 18 g | 37 g |
| Staubspeicherkapazität, die erzielt wird, wenn sich der Druckabfall des Filtermediums bei 300 m³/h um 200 Pa erhöht; in g: a) mit ISO 12103-1 A4 coarse Staub | 60 g | 105 g | 37 g | 65 g |

## Patentansprüche

1. Filterelement für Raumluftfilter, insbesondere Kraftfahrzeug-Kabinenluftfilter, mit einem synthetischen Partikelfiltervliesmaterial,
**dadurch gekennzeichnet,**
**dass** das Partikelfiltervliesmaterial aus einem nach einem Mikrospunbond-, Meltblown- oder ähnlichem Verfahren hergestellten Faservlies besteht, das selbsttragend plissierfähig ist und einen mittleren Faserdurchmesser von > 3 µm und Stützfasern mit einem Faserdurchmesser von 8 bis 30 µm, vorzugsweise von 15 bis 25 µm, aufweist, wobei das Faser-Vlies mit einer Noppen- oder Sickenstruktur ausgebildet ist,
die Noppen- oder Sickenstruktur nach dem Verfahren gemäß Anspruch 4 hergestellt ist, wodurch ein Reißen des Faservlieses vermieden wird.

2. Filterelement nach Anspruch 1,
**dadurch gekennzeichnet,**
**dass** das Faser-Vlies mit einer gleichmäßigen Noppen- oder Sickenstruktur ausgebildet ist.

3. Filterelement nach Anspruch 1,
**dadurch gekennzeichnet,**
**dass** das mit einer Noppen- oder Sickenstruktur ausgebildete Faser-Vlies mit einer Nanofaserbeschichtung versehen ist.

4. Verfahren zur Herstellung eines Filterelementes für Raumluftfilter mit einem synthetischen Parükelfiltervliesmaterial, das aus einem nach einem Mikrospunbond-, Meltblown- oder ähnlichem Verfahren hergestellten Faservlies besteht, das selbsttragend plissierfähig ist und einen mittleren Faserdurchmesser von > 3 µm und Stützfasem mit einem Faserdurchmesser von 8 bis 30 µm, vorzugsweise von 15 bis 25 µm, aufweist, wobei das Faser-Vlies mit einer Noppen- oder Sickenstruktur ausgebildet ist, **dadurch gekennzeichnet, dass** das Faservliesmaterial auf ein genopptes oder mit Sicken versehenes,
luftdurchlässiges Ablageelement abgelegt wird, wobei sich die Oberflächenstruktur des Ablageelementes spiegelbildlich in der Oberflächenstruktur der Vliesmaterialschicht abbildet.

5. Verfahren nach Anspruch 4,
**dadurch gekennzeichnet,**
**dass** ein gleichmäßig genopptes oder mit Sicken versehenes Ablageelement verwendet wird.

6. Verfahren nach Anspruch 4 oder 5,
**dadurch gekennzeichnet,**
**dass** das genoppte oder gesickte Faservliesmaterial zusätzlich mit einer Nanofaser-Beschichtung versehen wird.

7. Verfahren nach Anspruch 6,
**dadurch gekennzeichnet,**
**dass** die Nanofaser-Beschichtung mittels eines elektrostatischen Spinnverfahrens erfolgt.

## Claims

1. Filter element for an air-conditioning filter, in particular a motor vehicle cab air filter, comprising a synthetic particle filter non-woven material, **characterised in that** the particle filter non-woven material consists of a non-woven fabric which is produced by a micro-spunbonding, melt-blowing or similar method, is pleatable in a self-supporting manner and has a mean fibre diameter of > 3 µm and supporting fibres with a fibre diameter of 8 to 30 µm, preferably of 15 to 25 µm, wherein the non-woven fabric is formed with a burl or bead structure, the burl or bead structure being producible by the method according to claim 4, whereby a tearing of the non-woven fabric is avoided.

2. Filter element according to claim 1, **characterised in that** the non-woven fabric is formed with a uniform burl or bead structure.

3. Filter element according to claim 1, **characterised in that** the non-woven fabric formed with a burl or bead structure is provided with a nanofibre coating.

4. Method for producing a filter element for an air-conditioning filter comprising a synthetic particle filter non-woven material which consists of a non-woven fabric which is produced by a micro-spunbonding, melt-blowing or similar process, is pleatable in a self-supporting manner and has a mean fibre diameter of > 3 µm and supporting fibres having a fibre diameter of 8 to 30 µm, preferably of 15 to 25 µm, the non-woven fabric being formed with a burl or bead structure, **characterised in that** the non-woven fabric material is deposited on an air-permeable depositing element which is burled or provided with beads, the surface structure of the storage element being reproduced in the surface structure of the non-woven material layer in a mirror image.

5. Method according to claim 4, **characterised in that** a depositing element which is burled or provided with beads in a uniform manner is used.

6. Method according to either claim 4 or claim 5, **characterised in that** the burled or beaded non-woven fabric material is additionally provided with a nanofibre coating.

7. Method according to claim 6, **characterised in that** the nanofibre coating is applied by means of an electrostatic spinning process.

## Revendications

1. Elément de filtration pour filtre à air, en particulier un filtre à air pour cabine de véhicule automobile, composé d'un matériau non tissé synthétique de filtrage de particules, **caractérisé en ce que** le matériau non tissé de filtrage de particules est composé d'un tissu non tissé fabriqué selon un procédé de micro-spunbond ou de meltblown ou un procédé similaire, tissu non tissé qui peut se plisser de manière autonome et présente un diamètre de fibre moyen > 3 µm et des fibres de renforcement d'un diamètre compris entre 8 et 30 µm, de préférence entre 15 et 25 µm, le tissu non tissé étant réalisé avec une structure à boutons ou moulures, la structure à boutons ou moulures étant fabriquée suivant le procédé de la revendication 4, moyen par lequel on évite un déchirement du tissu non tissé.

2. Elément de filtration selon la revendication 1, **caractérisé en ce que** le tissu non tissé est réalisé avec une structure à boutons ou moulures homogène.

3. Elément de filtration selon la revendication 1, **caractérisé en ce que** le tissu non tissé réalisé avec une structure à boutons ou moulures est pourvu d'un revêtement en nanofibres.

4. Procédé de fabrication d'un élément de filtration pour filtre à air comportant un matériau non tissé synthétique de filtrage de particules composé d'un tissu non tissé fabriqué selon un procédé de micro-spunbond ou de meltblown ou un procédé similaire, tissu non tissé qui peut se plisser de manière autonome et présente un diamètre de fibre moyen > 3 pm et des fibres de renforcement d'un diamètre compris entre 8 et 30 µm, de préférence entre 15 et 25 µm, le tissu non tissé étant réalisé avec une structure à boutons ou moulures, **caractérisé en ce que** le matériau non tissé est posé sur un support perméable à l'air pourvu de boutons ou de moulures, la structure superficielle du support étant l'image inversée de la structure superficielle de la couche de matériau non tissé.

5. Procédé selon la revendication 4, **caractérisé en ce qu'**on utilise un support pourvu de boutons ou moulures répartis de manière homogène.

6. Procédé selon la revendication 4 ou 5, **caractérisé en ce que** le matériau en tissu non tissé, pourvu de boutons ou moulures, est en outre muni d'un revêtement en nanofibres.

7. Procédé selon la revendication 6, **caractérisé en ce que** le revêtement en nanofibres est appliqué au moyen d'un procédé de filature électrostatique.
